# EUROPEAN PATENT APPLICATION

(11) **EP 4 593 135 A2**
(43) Date of publication of application: **30.07.2025**
(21) Application number: 24215885.5
(22) Date of filing: 27.11.2024
(51) Int. Cl.: H01M 10/04, H01M 10/44, H01M 10/46

(54) **TRAY AND SECONDARY BATTERY MANUFACTURING APPARATUS**

(30) Priority: 29.01.2024 JP 2024011202
(71) Applicant: Kataoka Corporation, Kyoto-shi, Kyoto 601-8203 (JP)
(72) Inventor: ONISHI, Katsuaki, 601-8203 Kyoto (JP); NISHIGOORI, Atsushi, 601-8203 Kyoto (JP); SEGAWA, Fujio, 601-8203 Kyoto (JP)
(74) Representative: Seemann & Partner Patentanwälte mbB

(57) **Abstract**

A tray that is used in a manufacturing process of a secondary battery and accommodates a plurality of battery cells arranged in an arrangement direction. The tray includes a guide shaft portion extending in the arrangement direction, a plurality of partition plates guided by the guide shaft portion and configured to be moved along the arrangement direction, a pressing mechanism guided by the guide shaft portion and configured to be moved along the arrangement direction, and a collar that is coaxial with the guide shaft portion and disposed between two partition plates adjacent to each other among the plurality of partition plates.

## Description

### TECHNICAL FIELD

The present disclosure relates to a tray used in a manufacturing process of a secondary battery, and a secondary battery manufacturing apparatus.

### BACKGROUND ART

As disclosed in JP2017-188282A, there is a manufacturing apparatus for manufacturing a secondary battery by restraining a plurality of secondary batteries by a restraining fixture.

Since the restraining fixture disclosed in JP2017-188282A only applies pressure to a plurality of battery cells with a predetermined load, thickness dimensions of the battery cells are likely to vary.

### SUMMARY OF INVENTION

Aspect of non-limiting embodiments of the present disclosure relates to provide a tray used in a manufacturing process of a secondary battery capable of reducing variations in thickness dimensions of battery cells.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a tray that is used in a manufacturing process of a secondary battery and accommodates a plurality of battery cells arranged in an arrangement direction, the tray including:
a guide shaft portion extending in the arrangement direction;
a plurality of partition plates guided by the guide shaft portion and configured to be moved along the arrangement direction;
a pressing mechanism guided by the guide shaft portion and configured to be moved along the arrangement direction, the pressing mechanism being configured to switch the plurality of partition plates and the battery cells accommodated between the plurality of partition plates, between a restrained state in which a restraining load is applied in the arrangement direction and an unrestrained state in which no restraining load is applied in the arrangement direction; and
a collar that is coaxial with the guide shaft portion and disposed between two partition plates adjacent to each other among the plurality of partition plates, the collar being configured to define a minimum separation distance between the two partition plates.

According to an aspect of the present disclosure, there is provided a tray that is used in a manufacturing process of a secondary battery and accommodates a plurality of battery cells arranged in an arrangement direction, the tray including:
a guide shaft portion extending in the arrangement direction;
a plurality of partition plates guided by the guide shaft portion and configure to be moved along the arrangement direction;
a pressing mechanism guided by the guide shaft portion and configured to be moved along the arrangement direction, the pressing mechanism being configured to switch the plurality of partition plates and the battery cells accommodated between the plurality of partition plates, between a restrained state in which a restraining load is applied in the arrangement direction and an unrestrained state in which no restraining load is applied in the arrangement direction; and
a connection bracket configured to define a maximum separation distance between the two partition plates.

According to an aspect of the present disclosure, there is provided a secondary battery manufacturing apparatus in which a restraining tray configured to switch between a restrained state in which a restraining load is applied in an arrangement direction and an unrestrained state in which no restraining load is applied in the arrangement direction in a state in which a plurality of battery cells are arranged in the arrangement direction, and a normal tray in which no restraining load is applied in the arrangement direction is used,
the secondary battery manufacturing apparatus including:
a first device configured to perform at least one of an initial charging process, a charging and discharging process, and a charging and discharging inspection process, in a state where the battery cells are placed on the restraining tray and are in the restrained state;
an aging device configured to perform an aging process in a state where the battery cells are placed on the normal tray; and
a transfer device configured to transfer the battery cells from the restraining tray to the normal tray or from the normal tray to the restraining tray.

### BRIEF DESCRIPTION OF DRAWINGS

Exemplary embodiment(s) of the present invention will be described in detail based on the following figures, wherein:
FIG. 1 is a diagram illustrating a configuration example of a secondary battery manufacturing apparatus according to an embodiment of the present disclosure.
FIG. 2 is a perspective view illustrating a state in which battery cells are accommodated in a tray according to the embodiment of the present disclosure.
FIG. 3 is a perspective view illustrating a configuration of the tray according to the embodiment of the present disclosure.
FIG. 4 is a diagram illustrating an example of a partition plate included in the tray of the present disclosure.
FIG. 5 is a side view illustrating the tray in an unrestrained state according to the embodiment of the present disclosure.
FIG. 6 is an enlarged perspective view of a portion indicated by VI in FIG. 5.
FIG. 7 is a side view illustrating the tray in a restrained state according to the embodiment of the present disclosure.
FIG. 8 is an enlarged perspective view of a portion indicated by VIII in FIG. 7.

### DESCRIPTION OF EMBODIMENTS

A tray used in a secondary battery manufacturing process and a secondary battery manufacturing apparatus according to the present disclosure will be described in detail with reference to the drawings.

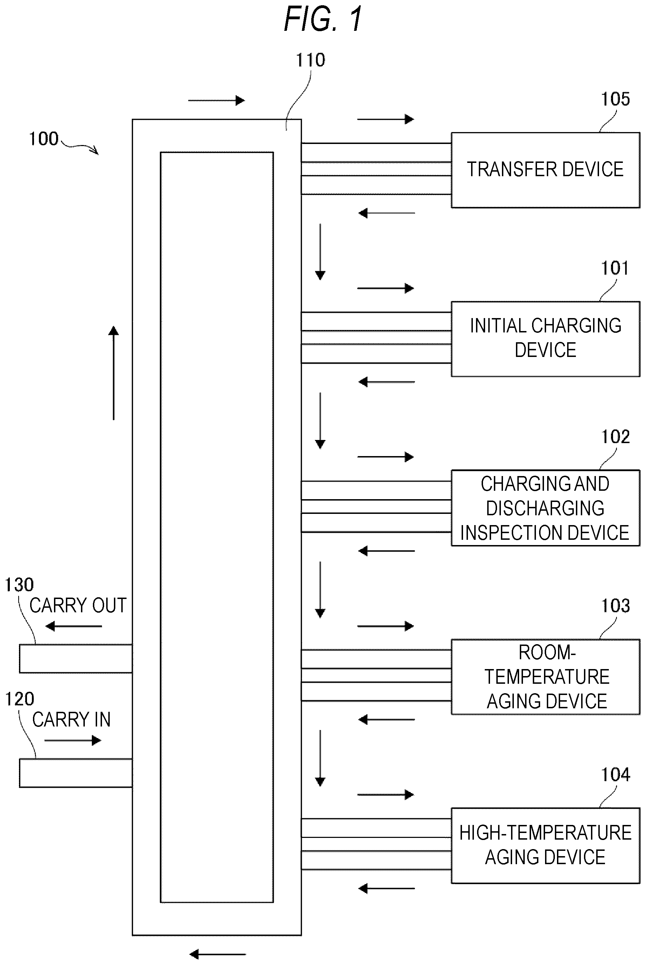

FIG. 1 is a schematic diagram illustrating a configuration of the secondary battery manufacturing apparatus according to an embodiment of the present disclosure. As illustrated in FIG. 1, a secondary battery manufacturing apparatus 100 includes an initial charging device 101, a charging and discharging inspection device 102, a room-temperature aging device 103, and a high-temperature aging device 104. The secondary battery manufacturing apparatus 100 is an apparatus for performing at least an initial charging process, an aging process, and a charging and discharging inspection process on assembled battery cells.

A type of secondary battery manufactured by the manufacturing apparatus 100 is not particularly limited. For example, the manufacturing apparatus 100 is a manufacturing apparatus for manufacturing a lithium-ion battery. A shape of battery cell processed by the manufacturing apparatus 100 is not particularly limited, and examples thereof include a pouch battery cell and a square battery cell.

The battery cells carried into the manufacturing apparatus 100 are subjected to each process in a state of being placed on the tray. The manufacturing apparatus 100 uses two types of trays, as a tray for placing battery cells. That is, the manufacturing apparatus 100 uses a normal tray and a restraining tray.

The normal tray is typically a tray that has only a function of accommodating a plurality of battery cells. The normal tray is mainly used for conveyance between each device in the manufacturing apparatus 100 and conveyance between the manufacturing apparatus 100 and an outside thereof. A configuration of normal tray is not particularly limited, and at least the normal tray is not provided with a mechanism for pressing battery cells, which is included in a restraining tray described later. The normal tray has a simpler structure than the restraining tray described later, and thus can be manufactured at a relatively low cost. For example, the normal tray may be provided with a recess that opens upward and in which a plurality of battery cells are accommodated together. The normal tray may be configured to support lower portions of the battery cells and to prevent external forces, such as those for restraining, from acting on the battery cells.

The restraining tray is a tray that includes a mechanism configured to apply a restraining load to the battery cells by pressing them. The restraining tray is used when the battery cells are subjected to the initial charging process and the charging and discharging inspection process. By performing the initial charging process and the charging and discharging inspection process in a state where the battery cells are pressed and restrained, performance of the secondary battery to be manufactured can be improved.

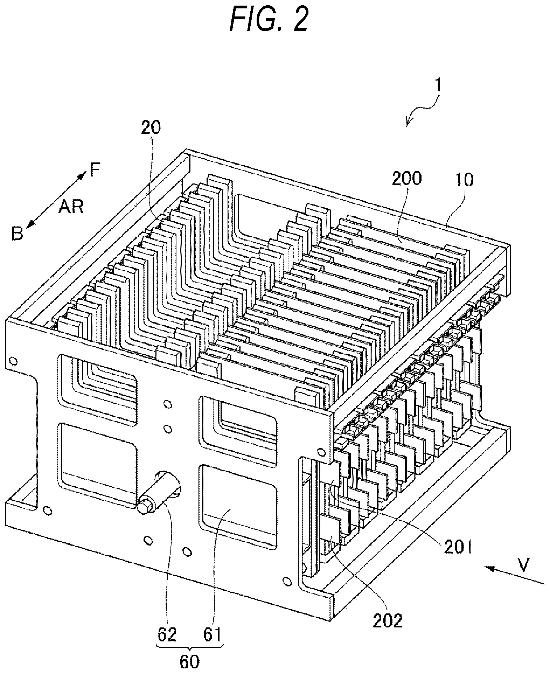

Here, a tray according to the embodiment of the present disclosure will be described. FIG. 2 is a perspective view illustrating a tray 1 according to the embodiment of the present disclosure. The tray 1 according to the present embodiment corresponds to a restraining tray. As illustrated in FIG. 2, the tray 1 includes a case 10, a plurality of partition plates 20, and a pressing mechanism 60. In the tray 1 illustrated in FIG. 2, the plurality of partition plates 20 are arranged in two rows along an arrangement direction AR. In the following description, for convenience, an F direction side illustrated in FIG. 2 may be referred to as front and a B direction side may be referred to as back. For example, movement in the F direction may be expressed as "advance" and movement in the B direction as "retract". Although the battery cell 200 is illustrated on a right side of the drawing sheet of FIG. 2, the battery cell 200 is merely illustrated for illustrating a state in which the battery cells are accommodated in the tray 1, and is not an element constituting the tray 1. As illustrated in FIG. 2, the battery cell 200 is accommodated in the tray 1 such that lead electrodes 201, 202 protrude laterally, and charging and discharging are performed via the lead electrodes 201, 202 in an initial charging device and a charging and discharging inspection device.

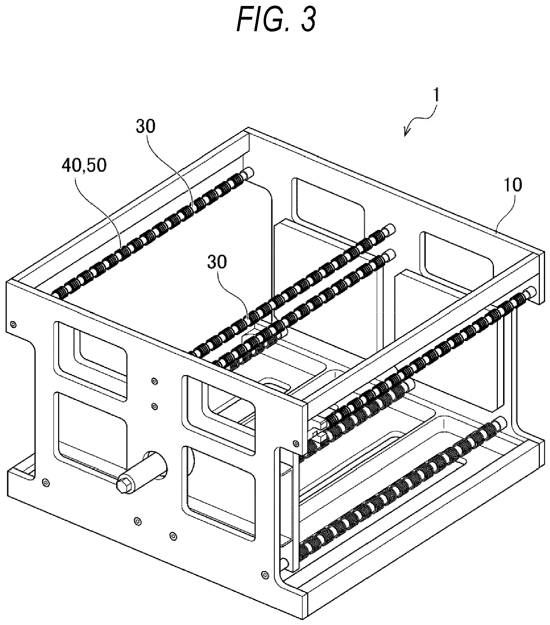

FIG. 3 is a view illustrating a state in which the partition plate 20 is removed from the tray 1. As illustrated in FIG. 3, the tray 1 is provided with guide shaft portions 30 extending in the arrangement direction AR from one end to the other end of the case 10. In the tray 1 according to the present embodiment, a total of eight guide shaft portions 30 are provided such that four guide shaft portions 30 are passed through one partition plate 20. The guide shaft portion 30 is passed through a collar 40 and a coil spring 50. Details of the collar 40 and the coil spring 50 will be described later.

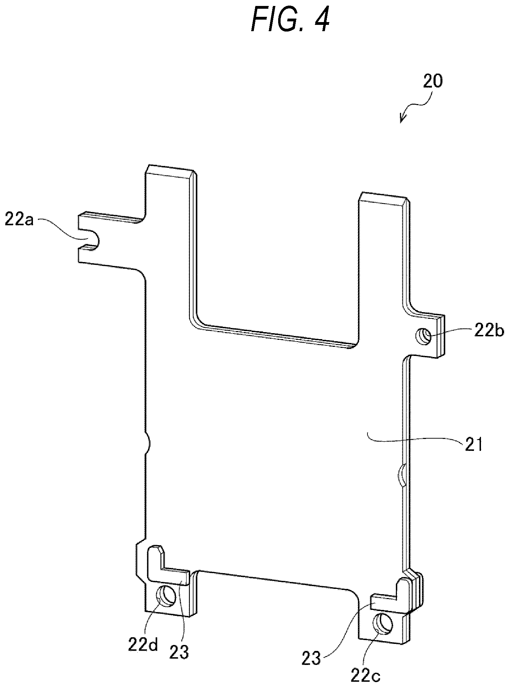

FIG. 4 is a perspective view illustrating an example of the partition plate 20. As illustrated in FIG. 4, the partition plate 20 is formed of a plate-shaped base material 21, and the base material 21 is provided with a recess or a hole through which the guide shaft portion 30 passes. The partition plate 20 illustrated in FIG. 4 is provided with one recess 22a and three holes 22b, 22c, and 22d. The guide shaft portion 30 illustrated in FIG. 3 passes through each recess or hole, thereby forming the tray 1 illustrated in FIG. 2. The plurality of partition plates 20 included in the tray 1 are guided by the guide shaft portions 30 and configured to be moved along the arrangement direction AR.

Further, as illustrated in FIG. 4, the partition plate 20 is provided with two L-shaped protrusions 23 protruding from the base material 21. The battery cell 200 is configured to be accommodated between the partition plates by being supported by horizontal portions of the protrusions 23. Vertical portions of the protrusions 23 restrict lateral positional displacement of the battery cell 200. By providing the partition plate 20 with the protrusions 23, the battery cell 200 can be stably supported between the partition plates 20. The number and shapes of the protrusions 23 are not particularly limited as long as the protrusions 23 can restrict the positional displacement of the battery cell 200.

The partition plate 20 may be formed of a solid plate material, and may have a hollow portion. By providing the hollow portion, weight reduction can be achieved and raw material cost can be reduced. For example, a hollow portion can be provided by forming the partition plate 20 by overlapping two injection-molded plate materials.

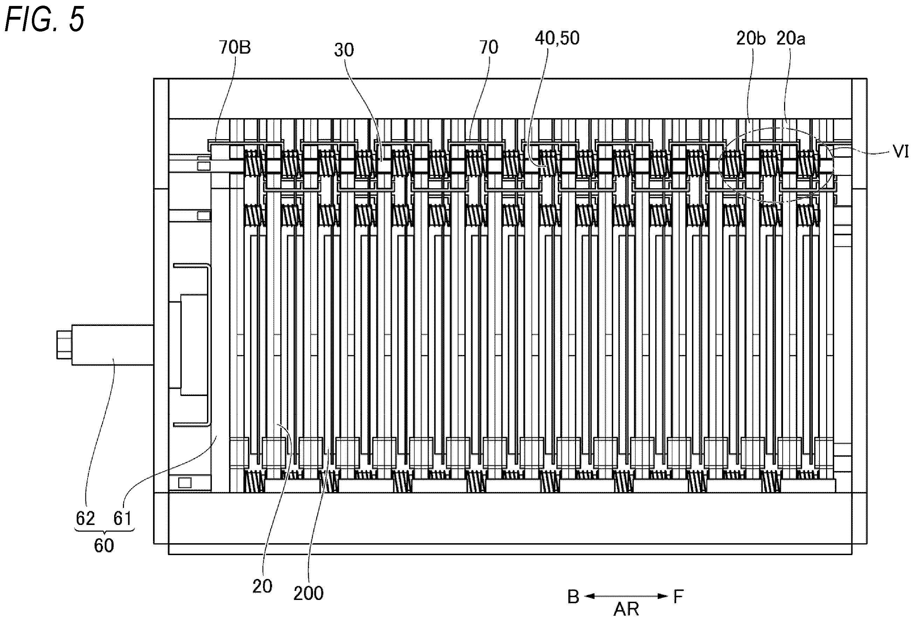

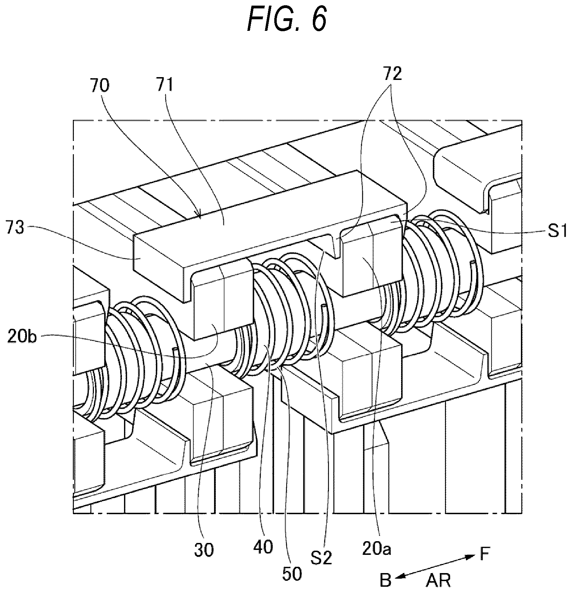

FIG. 5 is a side view of the tray 1 as viewed in a direction of an arrow V in FIG. 2. As illustrated in FIG. 5, the battery cells 200 are accommodated between the adjacent partition plates 20. FIG. 6 is an enlarged perspective view of a portion indicated by VI in FIG. 5. As illustrated in FIG. 5 and FIG. 6, the collar 40 and the coil spring 50 are disposed between the adjacent partition plates 20a, 20b, coaxially with the guide shaft portion 30. As described later, the collar 40 is a member configured to define a minimum separation distance at which a distance between the adjacent partition plates 20a, 20b is minimum.

Further, the tray 1 includes a connection bracket 70 configured to connect the adjacent partition plates 20a, 20b. As illustrated in FIG. 6, the connection bracket 70 includes a base portion 71 extending in the arrangement direction AR, a pair of wall portions 72 provided on a front side of the base portion 71, and a regulating wall 73 provided on a back side of the base portion 71. A first space S1 is provided between the pair of wall portions 72. The first space S1 opens in a direction intersecting the arrangement direction AR (vertically downward direction or upward direction in FIG. 6). One partition plate 20a is inserted into the first space S1. The pair of wall portions 72 come into contact with both surfaces of the one partition plate 20a. Thus, the connection bracket 70 and the one partition plate 20a are fixed each other. The connection bracket 70 includes the regulating wall 73 erected from the base portion 71 on the back side of the connection bracket 70. A second space S2 is provided between the pair of wall portions 72 and the regulating wall 73. The second space S2 opens in the same direction as the first space S 1. That is, the second space S2 opens in a direction intersecting the arrangement direction AR (vertically downward direction or upward direction in FIG. 6). The second space S2 allows the other partition plate 20b to move in the arrangement direction AR, while the other partition plate 20b enters the second space S2.

Since the pair of wall portions 72 of the connection bracket 70 are fixed to the one partition plate 20a and the other partition plate 20b enters the second space S2, in a case where the one partition plate 20a and the other partition plate 20b are separated by a predetermined distance, the other partition plate 20b comes into contact with the regulating wall 73. The regulating wall 73 restricts movement of the other partition plate 20b so as not to further separate from the one partition plate 20a. Therefore, in a state in which the other partition plate 20b and the regulating wall 73 come into contact with each other, a separation distance between the adjacent partition plates 20a, 20b is maximized. As described above, the connection bracket 70 is a member configured to define a maximum separation distance between the adjacent partition plates 20a, 20b.

In the tray 1 according to the present embodiment, the connection bracket 70 in which the first space S1 and the second space S2 are arranged to open in the vertically downward direction, and the connection bracket 70 in which the first space S1 and the second space S2 are arranged to open in the vertically upward direction are alternately provided. According to this configuration, all adjacent partition plates 20 are connected by the connection bracket 70 while the connection bracket 70 does not interfere with other connection brackets 70.

Hereinafter, switching between a restrained state and an unrestrained state and functions of each member in the state switching will be described with reference to FIG. 5 to FIG. 8. First, a case of switching from the unrestrained state to the restrained state will be described. As illustrated in FIG. 5, the tray 1 includes the pressing mechanism 60, and the pressing mechanism 60 includes a pressing plate 61 and a feeding screw 62. FIG. 5 illustrates a state in which the pressing plate 61 is most retracted, and no restraining load is applied to the plurality of partition plates 20 and the battery cells 200 arranged between the partition plates 20 in the arrangement direction AR. That is, the partition plates 20 and the battery cells 200 illustrated in FIG. 5 are in the unrestrained state.

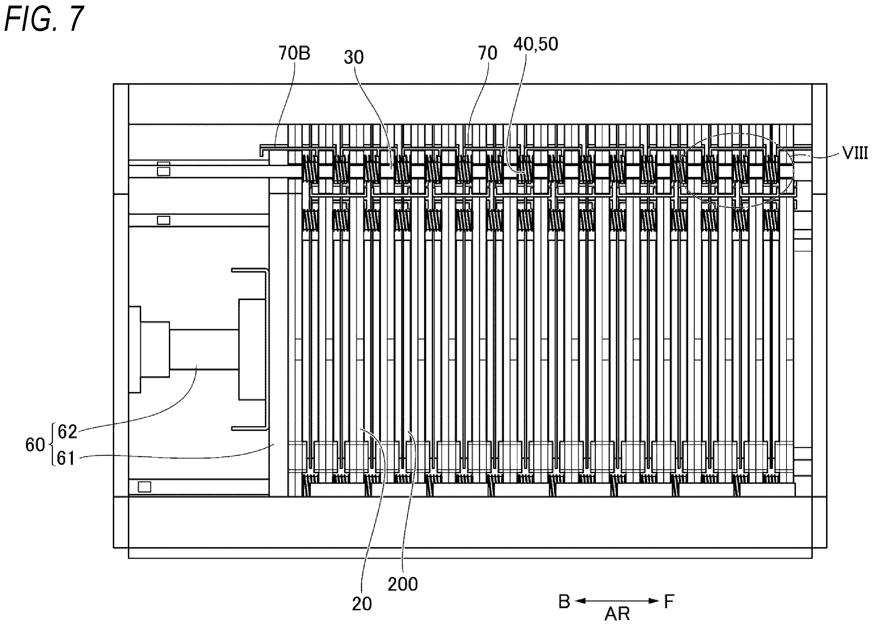

By rotating the feeding screw 62, the pressing plate 61 can be advanced or retracted along the arrangement direction AR. By rotating the feeding screw 62 from the unrestrained state illustrated in FIG. 5 to advance the pressing plate 61 along the arrangement direction AR, the plurality of partition plates 20 and the battery cells 200 accommodated between the partition plates 20 can be pressed in the arrangement direction AR. FIG. 7 illustrates a state in which the pressing plate 61 is most advanced, and a restraining load is applied to the plurality of partition plates 20 and the battery cells 200 in the arrangement direction AR. That is, the partition plates 20 and the battery cells 200 illustrated in FIG. 7 are in the restrained state.

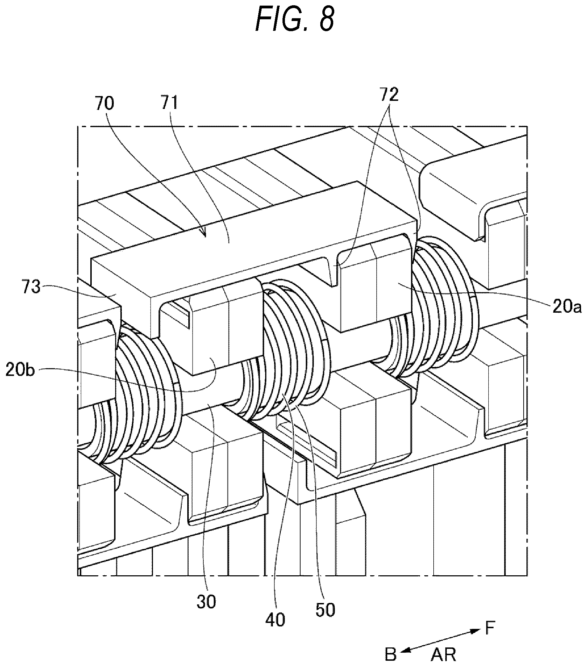

FIG. 8 is an enlarged perspective view of a portion indicated by VIII in FIG. 7. When FIG. 6 is compared with FIG. 8, the separation distance between the adjacent partition plates 20a, 20b is shorter in the restrained state illustrated in FIG. 8 than that in the unrestrained state illustrated in FIG. 6. Here, as illustrated in FIG. 8, the collar 40 is coaxial with the guide shaft portion 30 and disposed between the partition plates 20a, 20b. Both the adjacent partition plates 20a, 20b come into contact with the collar 40. The collar 40 is formed of a material having sufficient rigidity. The collar 40 is configured to restrict the adjacent partition plates 20a, 20b from coming closer to each other than in the state illustrated in FIG. 8. That is, since the collar 40 is disposed between the adjacent partition plates 20a, 20b, the minimum separation distance between the partition plates 20a, 20b is defined. The minimum separation distance coincides with a dimension of the collar 40 in the arrangement direction AR.

In the manufacturing process of the secondary battery, processes such as the initial charging process and the charging and discharging inspection process may be performed by pressing the battery cells to be in the restrained state as illustrated in FIG. 7. In such a case, thickness dimensions of the battery cells may vary by simply applying a predetermined load and pressing. For example, unlike the present embodiment, when the plurality of battery cells in the restrained state are simply collectively pressed by applying a predetermined load, the predetermined load is equally applied to each battery cell, and a thickness of each battery cell is substantially uniformly contracted. In a case in which the thickness dimensions of the battery cells vary due to a manufacturing error or the like in a state before the battery cells are brought into the restrained state, even if the battery cells are brought into the restrained state, the varied thicknesses of the plurality of battery cells cannot be made uniform.

On the other hand, in the tray 1 according to the present embodiment, since the collar 40 that defines the minimum separation distance is disposed between the adjacent partition plates 20a, 20b, when the partition plates are in the restrained state, the distance between the partition plates can be made equal to a length dimension of the collar 40, and variations in the thickness dimensions of the finally obtained battery cells 200 can be reduced.

Next, switching from the restrained state to the unrestrained state will be described. The restrained state illustrated in FIG. 7 can be switched to the unrestrained state illustrated in FIG. 5 by rotating the feeding screw 62 to retract the pressing plate 61. More specifically, as illustrated in FIG. 5 and FIG. 7, in the connection bracket 70B located at backmost among the connection brackets 70, the regulating wall 73 is erected behind the pressing plate 61 and extends across the two partition plates 20 and the pressing plate 61. In a case where the pressing plate 61 is retracted from the state in FIG. 7, first, the pressing plate 61 and the regulating wall 73 of the connection bracket 70B come into contact with each other. In a case where the pressing plate 61 is further retracted from this state, the two back partition plates 20 are retracted via the connection bracket 70B. Thereafter, the partition plates 20 come into contact with the regulating wall 73 of the connection bracket 70, and the partition plates 20 are retracted by sequentially pulling the adjacent partition plates 20, thereby switching to the unrestrained state in FIG. 5.

In a case of switching from the restrained state to the unrestrained state, in the restraining tray in the related art in which the distance between the partition plates is not controlled, when the pressing plate is retreated to a backmost position, an interval between some of the partition plates is excessively large, and the distance between the partition plates may vary. If there is a variation in the distance between the partition plates, positions of the battery cells accommodated in the restraining tray are not stable, and a failure may occur when the battery cells are transferred to another tray or defective cells are removed, using a robot arm or the like.

The tray 1 according to the present embodiment includes the connection bracket 70 that connects the adjacent partition plates 20a, 20b. In a case where the separation distance between the adjacent partition plates 20a, 20b is maximum, the movement of the other partition plate 20b is restricted by the regulating wall 73 as illustrated in FIG. 6. With such a configuration, the adjacent partition plates can be prevented from being separated more than necessary, the distance between the partition plates can be made constant, and as a result, the positions of the battery cells are stable.

Further, as illustrated in FIG. 6 and FIG. 8, the tray 1 according to the present embodiment includes the coil spring 50 that is coaxial with the guide shaft portion 30 between the adjacent partition plates 20a, 20b. The coil spring 50 is an example of an elastic member. The coil spring 50 is at least in a compressed state in the restrained state illustrated in FIG. 8, and exerts a restoring force thereof in a direction that separates the adjacent partition plates 20a, 20b. With such a configuration, the adjacent partition plates 20 can smoothly transition from the restrained state to the unrestrained state while maintaining an appropriate interval. Further, in a case where the coil spring 50 is in the compressed state even in the unrestrained state as illustrated in FIG. 6, the restoring force is always exerted in the direction that separates the adjacent partition plates 20, and the distance between the partition plates 20 is supported to be constant, which is preferable.

Although the tray of the present disclosure has been described above with reference to specific embodiments, the present disclosure is not limited to the embodiments.

In the tray 1 illustrated in FIG. 2, the battery cells are arranged in two rows, and the number of rows of the battery cells may be one row, or may be three or more rows. However, by arranging the battery cells in two rows as in the present embodiment, the battery cells and probes of a charging and discharging device can be connected to each other on both left and right side surfaces, and thus charging and discharging can be efficiently performed without requiring a complicated configuration.

In the tray 1 illustrated in FIG. 2, the collar 40 and the coil spring 50 are disposed on all of the four guide shaft portions 30 that pass through one partition plate 20. However, it is unnecessary to dispose the collar and the coil spring on all the guide shaft portions. For example, the collar and the coil spring may be disposed only on two guide shaft portions located on a diagonal line. The guide shaft portion on which the collar is disposed may be different from the guide shaft portion on which the coil spring is disposed. However, it is preferable to dispose the collar and the coil spring on all the guide shaft portions 30 because the partition plate can be stably moved.

Although the connection bracket 70 illustrated in FIG. 6 includes a fixing portion on the front side and a regulating portion on the back side in the arrangement direction AR, the connection bracket may include the fixing portion on the back side and the regulating portion on the front side in the arrangement direction AR. The base portion, the fixing portion, and the regulating portion are not limited to the configurations of the embodiment described above. For example, the base portion may have a rod shape instead of a plate shape. Instead of disposing the base portion above or below the partition plate, the base portion may pass through a hole provided in the partition plate. When the base portion is passed through the hole, the connection bracket 70 may be configured by making the regulating portion thicker than the hole to have a rivet shape. A joining member such as a screw may be used to fix the fixing portion to one partition plate.

Referring back to FIG. 1, the secondary battery manufacturing apparatus according to the embodiment of the present disclosure will be described. As described above, the secondary battery manufacturing apparatus 100 illustrated in FIG. 1 includes the initial charging device 101, the charging and discharging inspection device 102, the room-temperature aging device 103, and the high-temperature aging device 104.

The initial charging device 101 is a device for performing an initial charging process of a secondary battery. Typically, the initial charging device 101 has a large number of arranged probes, and a pair of probes is connected to the lead electrodes 201, 202 for each of the plurality of battery cells 200 arranged and accommodated in the tray 1 as illustrated in FIG. 2, and thus initial charging can be performed on each battery cell at once. The initial charging device may perform only charging or may perform charging and discharging. In the initial charging process, charging and discharging may be performed a plurality of times.

The room-temperature aging device 103 and the high-temperature aging device 104 are devices for performing an aging process. Aging is a process of leaving the battery cells at a predetermined temperature for a predetermined time before or after the initial charging process, the charging and discharging inspection process, or the like. The room-temperature aging device 103 and the high-temperature aging device 104 are typically a thermostatic bath or a thermostatic chamber.

The charging and discharging inspection device 102 is a device for charging and discharging battery cells to properly form them and inspect their characteristics, and is typically a device that can charge or discharge a plurality of battery cells at once, similar to the initial charging device 101.

The manufacturing apparatus 100 includes a conveying device 110, and the battery cells can be transferred between each device by the conveying device 110. The conveying device 110 is provided with a carry-in opening 120 and a carry-out opening 130, and the battery cells before being subjected to the initial charging process are carried into the manufacturing apparatus 100 from the carry-in opening 120, and the battery cells for which the initial charging process, the aging process, and the charging and discharging inspection process are completed by the manufacturing apparatus 100 are carried out from the carry-out opening 130. Conveyance of the battery cells and manufacturing processes by each device are performed in a state in which the plurality of battery cells are placed on one tray.

As described above, the secondary battery manufacturing apparatus 100 includes a plurality of devices, and each device performs processes that take several hours to several tens of hours in parallel. Accordingly, the entire manufacturing apparatus 100 requires a plurality of trays as trays for placing the battery cells.

The initial charging process and the charging and discharging inspection process are performed while the battery cells are restrained. In such a case, it is considered that the battery cells are placed on the restraining tray in all processes in the manufacturing apparatus in the related art. In this case, a large number of restraining trays are required to smoothly operate the entire manufacturing apparatus. However, the manufacturing process of the secondary battery includes a process that does not require use of a restraining tray, such as an aging process. Therefore, as illustrated in FIG. 1, the manufacturing apparatus according to the present embodiment includes a transfer device 105 that transfers the battery cells from the normal tray to the restraining tray or from the restraining tray to the normal tray.

A specific configuration of the transfer device 105 is not particularly limited as long as the device has a mechanism capable of transferring the battery cells to different trays. In one configuration example, the transfer device 105 includes a robot arm, and transfers the battery cells using the robot arm based on identification information, positions, and the like of the trays and the battery cells transmitted from a connected control device. The transfer device 105 may include an image sensor for recognizing positions of the battery cells.

In the manufacturing apparatus 100 according to the present embodiment, the transfer to the other tray is performed at the following timing, for example. That is, the battery cells are first carried into the manufacturing apparatus 100 in a state of being placed on a normal tray. The process in which the carried-into battery cells are first subjected is the initial charging process. The initial charging process is performed in a restrained state using a restraining tray. Therefore, the normal tray carried into the manufacturing apparatus 100 is first conveyed to the transfer device 105 by the conveying device 110, and the battery cells placed on the normal tray are transferred with the restraining tray by the transfer device 105. Thereafter, the restraining tray on which the battery cells are placed is conveyed to the initial charging device 101.

The battery cells that have completed the initial charging process are then subjected to the aging process. An aging temperature and time can be appropriately selected, and aging is performed by at least one of the room-temperature aging device 103 and the high-temperature aging device 104. The aging process need not be performed in a restrained state. Therefore, the restraining tray on which the battery cells that have completed the initial charging process are placed is sent to the transfer device 105, and the battery cells are transferred to the normal tray. Thereafter, the normal tray on which the battery cells are placed is conveyed to the room-temperature aging device 103 or the high-temperature aging device 104.

The battery cells that have completed the aging process are then subjected to the charging and discharging inspection process. The charging and discharging inspection process is performed in a restrained state using a restraining tray. Therefore, the normal tray on which the battery cells that have completed the aging process are placed is conveyed to the transfer device 105 by the conveying device 110, and the battery cells are transferred to the restraining tray by the transfer device 105. Thereafter, the restraining tray on which the battery cells are placed is conveyed to the charging and discharging inspection device 102.

According to the manufacturing apparatus 100 of the present embodiment, for example, the aging process is performed not by the restraining tray but by the normal tray, and thus the restraining tray is empty during performing of the aging process. Therefore, the restraining tray can be used to place other battery cells to be subjected to the initial charging process and the charging and discharging inspection process. With such a configuration, the number of restraining trays required for the entire manufacturing apparatus 100 can be reduced, which is advantageous in terms of cost.

Although the secondary battery manufacturing apparatus of the present disclosure has been described above with reference to specific embodiments, the present disclosure is not limited to these embodiments.

In the manufacturing processes such as the initial charging process, since gas may be generated inside the battery cells, a degassing process of removing the gas generated inside the battery cells may be performed at a predetermined timing. The secondary battery manufacturing apparatus of the present disclosure may include a degassing device for performing the degassing process. The degassing process may be performed after the battery cells are placed on the restraining tray and are in the restrained state.

In the embodiment illustrated in FIG. 1, the transfer device 105 is provided independently of other devices such as the initial charging device 101. However, the transfer device may not be independent as long as the secondary battery manufacturing apparatus has a configuration capable of transferring the battery cells from the normal tray to the restraining tray or from the restraining tray to the normal tray. That is, the transfer device may be incorporated into another device such as an initial charging device as a mechanism for transferring the battery cells.

In addition to transferring battery cells between trays, the transfer device may perform a process of removing battery cells determined to be defective in an inspection process such as a charging and discharging inspection process. In this process, a transfer device may be configured to place dummy cells on the tray instead of the removed battery cells.

The embodiment described above can also be expressed as follows.
(1) A tray according to an aspect of the present disclosure that is used in a manufacturing process of a secondary battery and accommodates a plurality of battery cells arranged in an arrangement direction, the tray including:
   a guide shaft portion extending in the arrangement direction;
   a plurality of partition plates guided by the guide shaft portion and configured to be moved along the arrangement direction;
   a pressing mechanism guided by the guide shaft portion and configured to be moved along the arrangement direction, the pressing mechanism being configured to switch the plurality of partition plates and the battery cells accommodated between the plurality of partition plates between a restrained state in which a restraining load is applied in the arrangement direction and an unrestrained state in which no restraining load is applied in the arrangement direction; and
   a collar that is coaxial with the guide shaft portion and disposed between two partition plates adjacent to each other among the plurality of partition plates, the collar being configured to define a minimum separation distance between the two partition plates.

Since the tray includes the collar that defines the minimum separation distance, the distance between the partition plates in the restrained state can be made constant. Accordingly, variations in the thickness dimensions of battery cells manufactured using the tray can be reduced.

Furthermore, the embodiment described above can also be expressed as follows.

(2) A tray according to an aspect of the present disclosure that is used in a manufacturing process of a secondary battery and accommodates a plurality of battery cells arranged in an arrangement direction, the tray including:
a guide shaft portion extending in the arrangement direction;
a plurality of partition plates guided by the guide shaft portion and configured to be moved along the arrangement direction;
a pressing mechanism guided by the guide shaft portion and configured to be moved along the arrangement direction, the pressing mechanism being configured to switch the plurality of partition plates and the battery cells accommodated between the plurality of partition plates, between a restrained state in which a restraining load is applied in the arrangement direction and an unrestrained state in which no restraining load is applied in the arrangement direction; and
a connection bracket configured to define a maximum separation distance between the two partition plates.

Since the tray includes the connection bracket that defines the maximum separation distance of the partition plate, the distance between the partition plates in the unrestrained state can be made constant. Accordingly, the positions of the battery cells in the unrestrained state can be stabilized.

(3) The tray according to the above (2), may further include:
a collar that is coaxial with the guide shaft portion, disposed between the two partition plates, the collar being configured to define a minimum separation distance between the two partition plates.

By providing the collar, the distance between the partition plates in the restrained state can be controlled, and variations in the thickness dimensions of the battery cells can be reduced.

(4) The tray according to the above (2) or (3), in which
wherein the connection bracket includes:
a base portion extending in the arrangement direction;
a fixing portion provided on a first side of the base portion in the arrangement direction and fixed to one partition plate of the two partition plates adjacent to each other; and
a regulating portion provided on a second side of the base portion in the arrangement direction and configured to come into contact with an other partition plate of the two partition plates adjacent to each other in a case where a distance between the one partition plate and the other partition plate is the maximum separation distance.

Since the connection bracket includes the fixing portion and the regulating portion, the maximum separation distance between the partition plates can be more reliably ensured.

(5) The tray according to the above (4), in which
the fixing portion includes a pair of wall portions configured to come into contact with both surfaces of the one partition plate, and
the regulating portion includes a regulating wall configured to come into contact with a surface of the other partition plate, the surface being opposite to the one partition plate in the arrangement direction.

By providing the pair of wall portions, the connection bracket can be more easily and reliably fixed to the partition plate. By providing the regulating wall, the maximum separation distance can be more reliably ensured.

(6) The tray according to the above (5), in which
a first space is provided between the pair of wall portions, the first space being open in a direction intersecting the arrangement direction and into which the one partition plate is inserted, and
a second space is provided between the fixing portion and the regulating portion, the second space being open in a direction intersecting the arrangement direction and into which the other partition plate enters while allowing movement of the other partition plate in the arrangement direction.

By providing the opening in the connection bracket, the connection bracket can be easily attached by fitting the connection bracket into the partition plate.

(7) The tray according to any one of the above (1) to (6), may further include:
an elastic member that is coaxial with the guide shaft portion, disposed between the two partition plates, the elastic member being configured to exert a restoring force in a direction that separates the two partition plates.

By providing the elastic member between the partition plates, transition from the restrained state to the unrestrained state can be smoothly performed.

(8) The tray according to the above (7), in which
the elastic member may be in a compressed state even in the unrestrained state.

Since the restoring force of the elastic member normally acts in the direction that separates the partition plates, the distance between the partition plates in the unrestrained state can be easily maintained constant.

(9) The tray according to any one of the above (1) to (8), in which
wherein the partition plates are provided with protrusions configured to support the battery cells.

By providing the partition plates with the protrusions, the battery cells can be stably supported.

Furthermore, the embodiment described above can also be expressed as follows.

(10) A secondary battery manufacturing apparatus in which a restraining tray configured to switch between a restrained state in which a restraining load is applied in an arrangement direction and an unrestrained state in which no restraining load is applied in the arrangement direction in a state in which a plurality of battery cells are arranged in the arrangement direction, and a normal tray in which no restraining load is applied in the arrangement direction is used,
the secondary battery manufacturing apparatus including:
a first device configured to perform at least one of an initial charging process, a charging and discharging process, and a charging and discharging inspection process, in a state where the battery cells are placed on the restraining tray and are in the restrained state;
an aging device configured to perform an aging process in a state where the battery cells are placed on the normal tray; and
a transfer device configured to transfer the battery cells from the restraining tray to the normal tray or from the normal tray to the restraining tray.

A more excellent battery can be obtained by using the restraining tray in the initial charging process, the charging and discharging process, or the charging and discharging inspection process. Since the restraining tray includes a restraining mechanism and the like, the restraining tray is generally more expensive than the normal tray. On the other hand, in the aging process, even if a normal tray is used, the performance of the secondary battery is not greatly affected. In particular, since the aging process requires a longer process time than other processes, by transferring the battery cells to use a normal tray instead of a restraining tray in the aging process, the number of restraining trays required for the entire manufacturing apparatus can be reduced, which is advantageous in terms of cost.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A tray that is used in a manufacturing process of a secondary battery and accommodates a plurality of battery cells arranged in an arrangement direction, the tray comprising:
a guide shaft portion extending in the arrangement direction;
a plurality of partition plates guided by the guide shaft portion and configured to be moved along the arrangement direction;
a pressing mechanism guided by the guide shaft portion and configured to be moved along the arrangement direction, the pressing mechanism being configured to switch the plurality of partition plates and the battery cells accommodated between the plurality of partition plates, between a restrained state in which a restraining load is applied in the arrangement direction and an unrestrained state in which no restraining load is applied in the arrangement direction; and
a collar that is coaxial with the guide shaft portion and disposed between two partition plates adjacent to each other among the plurality of partition plates, the collar being configured to define a minimum separation distance between the two partition plates.

2. A tray that is used in a manufacturing process of a secondary battery and accommodates a plurality of battery cells arranged in an arrangement direction, the tray comprising:
a guide shaft portion extending in the arrangement direction;
a plurality of partition plates guided by the guide shaft portion and configured to be moved along the arrangement direction;
a pressing mechanism guided by the guide shaft portion and configured to be moved along the arrangement direction, the pressing mechanism being configured to switch the plurality of partition plates and the battery cells accommodated between the plurality of partition plates, between a restrained state in which a restraining load is applied in the arrangement direction and an unrestrained state in which no restraining load is applied in the arrangement direction; and
a connection bracket configured to define a maximum separation distance between the two partition plates.

3. The tray according to claim 2, further comprising:
a collar that is coaxial with the guide shaft portion, disposed between the two partition plates, the collar being configured to define a minimum separation distance between the two partition plates.

4. The tray according to claim 2 or claim 3,
wherein the connection bracket includes:
a base portion extending in the arrangement direction;
a fixing portion provided on a first side of the base portion in the arrangement direction and fixed to one partition plate of the two partition plates adjacent to each other; and
a regulating portion provided on a second side of the base portion in the arrangement direction and configured to come into contact with an other partition plate of the two partition plates adjacent to each other in a case where a distance between the one partition plate and the other partition plate is the maximum separation distance.

5. The tray according to claim 4,
wherein the fixing portion includes a pair of wall portions configured to come into contact with both surfaces of the one partition plate, and
the regulating portion includes a regulating wall configured to come into contact with a surface of the other partition plate, the surface being opposite to the one partition plate in the arrangement direction.

6. The tray according to claim 5,
wherein a first space is provided between the pair of wall portions, the first space being open in a direction intersecting the arrangement direction and into which the one partition plate is inserted, and
a second space is provided between the fixing portion and the regulating portion, the second space being open in a direction intersecting the arrangement direction and into which the other partition plate enters while allowing movement of the other partition plate in the arrangement direction.

7. The tray according to any one of claim 1 to claim 3, further comprising:
an elastic member that is coaxial with the guide shaft portion, disposed between the two partition plates, the elastic member being configured to exert a restoring force in a direction that separates the two partition plates.

8. The tray according to claim 7,
wherein the elastic member is in a compressed state even in the unrestrained state.

9. The tray according to any one of claim 1 to claim 3,
wherein the partition plates are provided with protrusions configured to support the battery cells.

10. A secondary battery manufacturing apparatus in which a restraining tray configured to switch between a restrained state in which a restraining load is applied in an arrangement direction and an unrestrained state in which no restraining load is applied in the arrangement direction in a state in which a plurality of battery cells are arranged in the arrangement direction, and a normal tray in which no restraining load is applied in the arrangement direction is used,
the secondary battery manufacturing apparatus comprising:
a first device configured to perform at least one of an initial charging process, a charging and discharging process, and a charging and discharging inspection process, in a state where the battery cells are placed on the restraining tray and are in the restrained state;
an aging device configured to perform an aging process in a state where the battery cells are placed on the normal tray; and
a transfer device configured to transfer the battery cells from the restraining tray to the normal tray or from the normal tray to the restraining tray.
